# EUROPÄISCHE PATENTSCHRIFT

(11) **EP 0 580 659 B1**
(45) Veröffentlichungstag und Bekanntmachung des Hinweises auf die Patenterteilung: **03.07.1996**
(21) Anmeldenummer: 92908140.4
(22) Anmeldetag: 09.04.1992
(51) Int. Cl.: F04D 7/06, F04D 13/06, F04D 29/10, F04D 29/42, H02K 5/12, H02K 7/14

(54) **FLUIDPUMPE**
PUMP FOR FLUIDS
POMPE A FLUIDES

(30) Priorität: 10.04.1991 DE 4111713
(43) Veröffentlichungstag der Anmeldung: 02.02.1994
(73) Patentinhaber: MAGNET-MOTOR GESELLSCHAFT FÜR MAGNETMOTORISCHE TECHNIK MBH, D-82319 Starnberg (DE); Parkner GmbH, D-45659 Recklinghausen (DE)
(72) Erfinder: HEIDELBERG, Götz, D-8136 Starnberg-Percha (DE); EHRHART, Peter, D-8000 München 70 (DE); STUCKMANN, Otto, Wilhelm, D-4350 Recklinghausen (DE); FISCHER, Roland, D-4630 Bochum (DE)
(74) Vertreter: Klunker . Schmitt-Nilson . Hirsch
(86) Internationale Anmeldenummer: EP9200812
(87) Internationale Veröffentlichungsnummer: WO9218774

(56) Entgegenhaltungen:
- DE-A- 1 403 854
- DE-B- 2 846 950
- US-A- 3 473 475
- US-A- 3 746 472
- US-A- 4 065 232
- Patent Abstracts of Japan, Band 7, Nr. 257 (M-256)[1402], 16. November 1983, & JP,A,58140500 (AKIRA WASHIDA) 20. August 1983, siehe Zusammenfassung
- Mécanique Materiaux Electricité, Band 55, Nr. 290, Februar 1974, (Paris, FR), M. GUER: "Problèmes rencontrés dans les pompes centrifuges et mécanismes fonctionnant en sodium et argon chaud", Seiten 16-17, siehe Abbildung 1

## Beschreibung

Die Erfindung betrifft eine Fluidpumpe gemäß dem Oberbegriff des Anspruchs 1. Eine derartige Fluidpumpe ist aus dem Dokument US-A-3.746.472 bekannt.

Speziell betrifft die Erfindung leistungsstarke Pumpen mit einer elektrischen Leistung im Bereich von 10 kW und mehr. Bislang war es üblich, derartige Pumpen mit erheblichem Aufwand in Rohrleitungssysteme einzubauen, wobei der Aufwand vornehmlich dadurch bedingt war, daß der Antrieb der eigentlichen Pumpeneinheit über einen außen an das Pumpengehäuse angeflanschten Motor erfolgte.

Derartige Pumpenaggregate, mit einer Leistung von 10 kW und mehr, sind schwer und voluminös und erfordern eine spezielle Lagerung auf einem festen Fundament, können also nicht direkt in den gegebenen Rohrleitungsverlauf integriert werden.

Nun gibt es besondere gesetzliche Vorschriften über die Auslegung von Pumpen, insbesondere solchen Pumpen, die zum Pumpen von umweltbelastenden Fluiden eingesetzt werden. Auf jeden Fall muß gewährleistet sein, daß ein Austritt von umweltgefährdenden Pumpgut verhindert wird. Dies wirft spezielle Probleme bei der Abdichtung der Wellendurchführung auf. Bei den bislang verwendeten Pumpen trat zumindest an einer Stelle des Pumpengehäuses die drehende Welle aus dem Gehäuse aus. Hier müssen besondere Dichtungsmaßnahmen getroffen werden.

Der Erfindung liegt die Aufgabe zugrunde, eine Fluidpumpe der eingangs genannten Art anzugeben, die sich aufgrund eines kompakten Aufbaus mühelos in Rohrleitungssysteme ohne besondere Lagerungsprobleme einbauen läßt und die außerdem durch Vermeidung von Wellendurchführungen im Gehäuse den Austritt von Pumpgut zuverlässig verhindert.

Gelöst wird diese Aufgabe erfindungsgemäß bei einer Fluidpumpe der genannten Art durch die im Anspruch 1 angegebene Merkmals- kombination.

Von außen betrachtet, ist das Gehäuse der erfindungsgemäßen Pumpe ein vollkommen hermetisch abgedichtetes Gebilde. Es gibt keine Stellen, an denen die Welle nach außen geführt ist. Dadurch läßt sich eine besonders gute hermetische Abdichtung des Gehäuses erreichen. Die Trennwand im Inneren des Gehäuses sorgt dafür, daß der Pumpenabschnitt in ausreichendem Maße von dem Antriebsabschnitt getrennt ist und mithin praktisch kein Pumpgut in den Hohlraum des Antriebsabschnitts gelangen kann. Dies ist insbesondere dann wichtig, wenn es sich um aggressives Pumpgut handelt, welches möglicherweise Teile des Antriebsabschnitts beschädigen könnte. Die Trennung wird noch unterstützt durch eine zwischen Pumpenabschnitt und Antriebsabschnitt befindliche Dichtung auf der drehenden Welle. Das in dem Hohlraum des Antriebsabschnitts befindliche Gas wird vorzugsweise mittels eines Druckreglers druckgeregelt. Dadurch läßt sich z.B. ein Gleichdruck zwischen dem Gas innerhalb des Antriebsabschnitts einerseits und dem Pumpgut im Pumpenabschnitt andererseits erreichen. Auch läßt sich der Gasdruck im Vergleich zum Druck des Pumpguts etwas höher einstellen. Damit wirkt der Gasdruck zusätzlich zu der Dichtung zwischen der drehenden Welle und der Bohrung der Trennwand mit bei dem Fernhalten von Pumpgut von dem Antriebsabschnitt.

Es kann aber dennoch vorkommen, daß auch bei gut funktionierender Dichtung und dem Zurückhalten des Pumpguts durch erhöhten Gasdruck im Antriebsabschnitt etwas von dem möglicherweise aggressiven Pumpgut in den Antriebsabschnitt gelangt. Erfindungsgemäß wird deshalb in dem Hohlraum des Antriebsabschnitts ein Sumpf vorgesehen, in welchem sich übergetretenes Pumpgut sammelt. Aus diesem Sumpf kann z.B. über eine mit einem Ventil ausgestattete Rückleitung das übergetretene Pumpgut in den Pumpenabschnitt zurückgepumpt werden. Damit wird der gesamte Antriebsabschnitt vor möglichen Beschädigungen durch aggressives Pumpgut geschützt.

Der Antriebsabschnitt ist vorzugsweise wassergekühlt. Damit befinden sich im Bereich des Antriebsabschnitts und mithin im gesamten Gehäuse lediglich eine Durchführung für die elektrischen Anschlüsse, eine Durchführung für Kühlmittel anschlüsse und gegebenenfalls eine Durchführung für einen Druckgasanschluß, wenn man von den notwendigerweise vorgesehenen Öffnungen des Gehäuses zum Einlassen und Auslassen des Pumpguts absieht.

Der Antriebsmotor ist vorzugsweise als Außenläufermotor ausgebildet, der mit einem topfförmigen Rotor ausgestattet ist. Der Rotorflansch ist direkt mit der Antriebswelle verbunden. Bevorzugt wird ein dauermagnetisch erregter Motor mit elektronischer Kommutierung des Statorstroms. Diese Motoren lassen sich besonders kompakt aufbauen, speziell wenn es sich um Motoren nach dem Flußsammlerprinzip zur Erhöhung der dauermagnetischen Flußdichte im Luftspalt handelt, und sind gut regelbar.

Um die Zuverlässigkeit der gesamten Pumpe noch zu erhöhen, sieht die Erfindung vor, daß sämtliche stehenden und rotierenden Teile des Antriebsmotors mechanisch hermetisch geschützt sind, so daß sie durch den Kontakt mit dem möglicherweise übergetretenen Pumpgut nicht angegriffen werden können.

Um eine möglichst kompakte Pumpeneinheit zu erhalten, wird erfindungsgemäß der Durchmesser des Antriebsmotors größer oder höchstens gleich der Länge des Motors gewählt, vorzugsweise sind der Außendurchmesser der rotierenden Pumpenteile und der Durchmesser des Antriebsmotors gleich.

Den Außenläufermotor kann man mit einer fliegenden Lagerung für den Rotor ausgestalten. "Fliegende Lagerung" bedeutet, daß der topf- oder glockenförmige Rotor einen Umfangsabschnitt und einen senkrecht zur Drehachse verlaufenden Rotorflansch aufweist, wobei die Antriebswelle über einen Wellenanschluß mit dem Rotorflansch verbunden ist und nicht in den Innenraum des Rotors hineinragt. Diese "fliegende Lagerung" bietet die Möglichkeit, den Stator an seiner zum Rotorflansch weisenden Seite hermetisch abzudichten, um ihn auf der dem Rotorflansch abgelegenen Seite dichtend mit einem Ringdeckel des Gehäuses zu verbinden, so daß der Innenraum des Stators zur Außenumgebung hin freiliegt. Dadurch kann die Kühlung des Motors im Bereich des Stators verbessert werden.

Man kann die Motorwelle aber auch in einem Stirnwandbereich des Antriebsabschnitts lagern, zusätzlich zu der Lagerung im Bereich der Trennwand zwischen Antriebsabschnitt und Pumpenabschnitt oder einer Lagerung im äußeren Teil des Pumpenabschnitts.

In der vorgeschlagenen Ausgestaltungsart ist es auch besonders einfach, die hermetische Dichtung auf die Kategorie "explosionsgeschützt" zu erweitern.

Im folgenden werden Ausführungsbeispiele der Erfindung anhand der Zeichnung näher erläutert. Es zeigen:
- Figur 1: eine Längsschnittansicht durch eine erste Ausführungsform einer Fluidpumpe; und
- Figur 2: den Antriebsabschnitt einer zweiten Ausführungsform einer Fluidpumpe, die im übrigen identisch wie die Ausführungsform nach Fig. 1 aufgebaut ist.

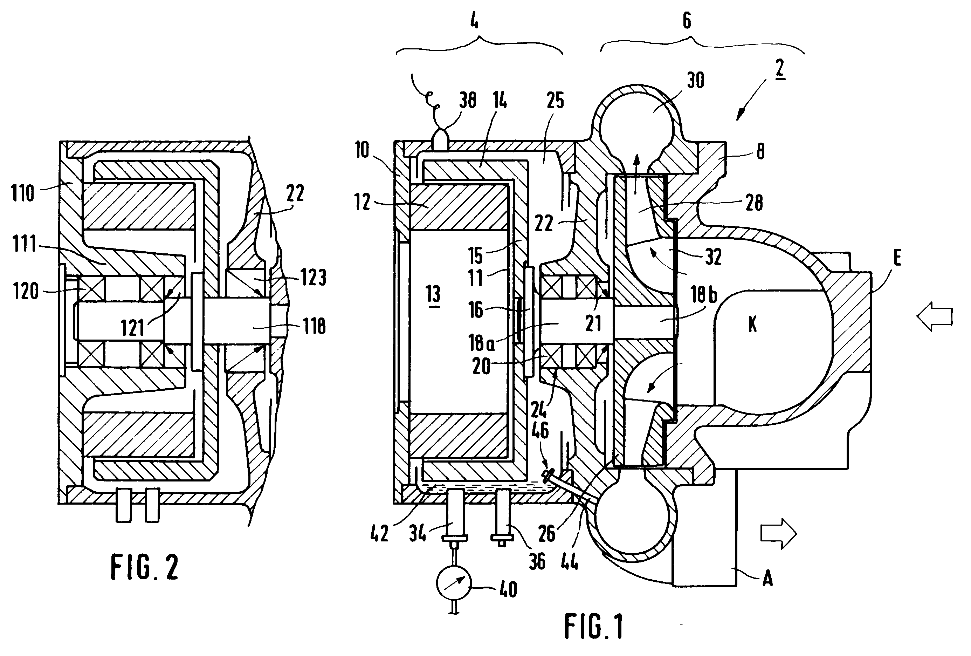

Die in Fig. 1 im Längsschnitt dargestellte Fluidpumpe 2 läßt sich als in einen Antriebsabschnitt 4 und einen Pumpenabschnitt 6 unterteilt betrachten, wobei Antriebsabschnitt 4 und Pumpenabschnitt 6 in einem hermetisch abgedichteten, z.B. aus Leichtmetall oder auch aus Kunststoff bestehenden Gehäuse 8 ausgebildet sind.

Links in Fig. 1 ist das Gehäuse 8 von einem Deckelring 10 teilweise verschlossen, auf dessen Innenseite hermetisch abgedichtet ein Stator 12 montiert ist, der auf der dem Deckelring 10 abgewandten Seite mit einer abgedichteten Gehäusewand 11 versehen ist.

Der Stator 12 wird umfaßt von einem topfförmigen Rotor 14, der über einen Rotorflansch 15 und einen Wellenanschluß 16 an einen Abschnitt großen Durchmessers 18a einer Antriebswelle 18 angeschlossen ist.

Das Gehäuse 8 wird zwischen Antriebsabschnitt 4 und Pumpenabschnitt 6 durch eine Trennwand 22 unterteilt, die mit einer Durchgangsbohrung 24 versehen ist, in der eine Lageranordnung 20 den Abschnitt 18a der Welle 18 drehbar lagert. An die Lageranordnung 20 schließt sich eine Dichtung 21 an.

Damit ist in dem Antriebsabschnitt 4 ein hermetisch abgedichteter Hohlraum 25 gebildet, in dem sich unter Druck stehenden Gas, z.B. Luft, befindet.

Die oben beschriebene Lagerung des topfförmigen Rotors 14, 15 an lediglich der Außenseite des Rotorflansches 15 wird als fliegende Lagerung bezeichnet.

Die Welle 18 besitzt einen einstückig mit dem Abschnitt 18a großen Durchmessers ausgebildeten Abschnitt 18b kleinen Durchmessers, auf dem ein Pumpenrad 26 aufgekeilt ist. Das Pumpenrad 26 besitzt in an sich bekannter Weise Radialkanäle 28 und eine Ringnut 32, so daß über eine Einlaßöffnung E in eine Pumpenkammer K gelangendes Pumpgut in die Ringnut 32 gelangt und dann durch die Zentrifugalkraft des sich drehenden Pumpenrades 26 durch die Radialkanäle 28 in einen äußeren Ringkanal 30 gedrückt wird, aus dem das Pumpgut dann axial in Pfeilrichtung aus dem Auslaß A austritt.

In der Zeichnung nicht dargestellt sind Haltungsteile zum Steuern des den Stator 12 und den Rotor 14 umfassenden Antriebsmotors. Dargestellt ist links oben in Fig. 1 eine Kabeldurchführung 38.

Links unten in Fig. 1 sind ein Druckgasanschluß 34 und ein Kühlmittelanschluß 36 angedeutet. Über den Druckgasanschluß 34 wird - mittels eines Druckreglers 40 geregelt - Druckgas in den Hohlraum 25 des Antriebsabschnitts 4 eingeleitet, wobei - bei gegebenem Druck des Pumpguts im Pumpenabschnitt 6 - der Druck des Gases im Hohlraum 25 so eingestellt wird, daß er mindestens genauso groß ist wie der Druck des Pumpguts. Damit wird die Dichtwirkung der Dichtung 21 noch unterstützt, da das unter Druck stehende Gas einen Gegendruck zu möglicherweise im Bereich des Wellenabschnitts 18a übertretenden Pumpguts darstellt.

Über den Kühlmittelanschluß 36 gelangt beispielsweise Kühlwasser in den Bereich des Antriebsabschnitts 4 und wird durch nicht dargestellte Kühlkanäle in den Antriebsmotor geleitet.

Im unteren Bereich des Gehäuses 8 im Antriebsabschnitt 4 ist ein Sumpf 42 vorhanden. Dieser Sumpf 42 dient zum Ansammeln von kleinen Mengen Pumpguts, die trotz der hohen Dichtigkeit zwischen Antriebsabschnitt und Pumpenabschnitt in den Antriebsabschnitt gelangt sind.

Von dem Sumpf 42 führt eine Rückführleitung 44, die im Bereich des Antriebsabschnitts 4 mit einem Ventil 46 ausgestattet ist, in den Ringkanal 30, so daß bei Bedarf Pumpgut aus dem Sumpf 42 in den Pumpenabschnitt zurückgepumpt werden kann.

Das gesamte Gehäuse 8 besitzt außer den Durchführungen 38 für die elektrischen Kabel und den Anschlüssen 34 und 36 für Druckgas bzw. Kühlmittel keine Durchführungen (abgesehen natürlich von dem Pumpgut-Einlaß E und dem Pumpgut-Auslaß A). Die Welle ist im Bereich der Trennwand 22 gelagert. Sollte Pumpgut im Bereich der Welle übertreten, so gelangt dies nicht nach außen, sondern lediglich in den Hohlraum 25, wo sich das übergetretene Pumpgut im Sumpf 42 ansammeln kann, um von dort zurückgepumpt zu werden.

Fig. 2 zeigt eine ähnliche Ausführungsform wie Fig. 1, jedoch ist die Lagerung des Rotors in Fig. 2 anders gestaltet.

Während gemäß Fig. 1 ein Deckelring 10 an der linken Stirnseite des Gehäuses 8 vorgesehen ist, befindet sich bei der Ausführungsform nach Fig. 2 an der linken Stirnwand des Gehäuses ein Verschlußdeckel 110 mit einem damit einstückig ausgebildeten, in das Innere des Gehäuses vorstehenden Lageraufnahmestutzen 111. In diesen Lageraufnahmestutzen 111 ist eine Lageranordnung 120 für die Antriebswelle 118 angeordnet. Zusätzlich zu der Lageranordnung 120 befindet sich im Inneren des Lageraufnahmestutzens noch eine Dichtung 121 zum Schutz des Lagers.

Im Bereich der Trennwand 22 befindet sich eine weitere Dichtung 123. Bei dieser Ausführungsform läßt sich der Verschlußdeckel 110 auf dessen Außenseite durch eine Kappe oder dergleichen verschließen, so daß eine hermetische Abdichtung des gesamten Gehäuses gewährleistet ist. Im Bereich der Dichtung wird vorzugsweise eine weitere Lagerung vorgesehen, die alternativ auf der Außenseite des Pumpenabschnitts angeordnet net sein kann.

Die in Fig. 1 dargestellte Ausführungsform kann auch so abgewandelt werden, daß der Stator im Bereich des Rotorflansches 15 offen ist, während der Mittelbereich des Deckelrings 10 von einer Kappe verschlossen wird.

## Patentansprüche

1. Fluidpumpe, mit einem elektrischen Antriebsmotor (12-15), auf dessene Welle (18, 118) ein Pumpenrad (26) eines Pumpenabschnitts (6) befestigt ist, und mit einem Gehäuse (8), das gemeinsam für den Antriebsmotor (12-15) und die rotierenden Teile (18, 26) des Pumpenabschnitts (6) hermetisch abgedichtet und ohne Wellendurchführung nach außen ausgebildet ist, und in dessen Innerem eine einen den Antriebsmotor (12-15) enthaltenden Antriebsabschnitt (4) von dem Pumpenabschnitt (6) trennende Trennwand (22) mit einer Wellendurchführungsbohrung (24) ausgebildet ist, wobei sich in einem den Antriebsmotor enthaltenden Hohlraum (25) des Antriebsabschnitts (4) zumindest überwiegend ein einen bestimmten Druck aufweisendes Gas befindet, dadurch gekennzeichnet, daß der Antriebsmotor einen topfförmigen Außenrotor mit dem Rotorboden (15) an der Trennwandseite aufweist, daß der Außenrotor in der Trennwand (22) eine fliegende Lagerung (20) aufweist, und daß der Antriebsmotor (12-15) als dauermagnetisch erregter Motor mit elektronischer Kommutierung des Statorstroms aufgebaut ist.

2. Pumpe nach Anspruch 1, dadurch gekennzeichnet, daß zwischen dem Pumpenabschnitt (6) und dem Antriebsabschnitt (4) eine Dichtung (21, 123) auf der drehenden Welle (18, 118) vorgesehen ist.

3. Pumpe nach Anspruch 1 und 2,
dadurch gekennzeichnet,
daß zwischen dem Pumpgut in dem Pumpenabschnitt (6)
und dem Gas innerhalb des Antriebsabschnitts (4) Gleichdruck herrscht.

4. Pumpe nach Anspruch 1 und 2,
dadurch gekennzeichnet,
daß das Gas einen höheren Druck als das Pumpgut in dem Pumpenabschnitt (6) aufweist.

5. Pumpe nach einem der Ansprüche 1 bis 4,
dadurch gekennzeichnet,
daß ein Druckregler (40) vorgesehen ist,
mit dem die Druckdifferenz zwischen dem Pumpgut und dem Gas durch Regelung des Gasdrucks einstellbar ist.

6. Pumpe nach einem der Ansprüche 1 bis 5,
dadurch gekennzeichnet,
daß der Antriebsmotor eine elektrische Leistung von 10 kW oder mehr aufweist.

7. Pumpe nach einem der Ansprüche 1 bis 6,
dadurch gekennzeichnet,
daß in dem Hohlraum des Antriebsabschnitts (4) ein Sumpf (42) vorgesehen ist, in dem von dem Pumpenabschnitt übergetretenes Pumpgut gesammelt wird.

8. Pumpe nach Anspruch 7,
gekennzeichnet durch
eine Rückführleitung (44), über die der Inhalt des Sumpfes (42) in den Pumpenabschnitt (6) zurückgepumpt wird.

9. Pumpe nach einem der Ansprüche 1 bis 8,
dadurch gekennzeichnet,
daß im Antriebsabschnitt (4) nur Kabel- und Kühlmittelanschlüsse (38, 36) und/oder ein Druckgasanschluß (34) vorgesehen sind.

10. Pumpe nach einem der Ansprüche 1 bis 9,
dadurch gekennzeichnet,
daß der Rotorboden (15) direkt mit der Antriebswelle verbunden ist.

11. Pumpe nach einem der Ansprüche 1 bis 10,
dadurch gekennzeichnet,
daß der Antriebsmotor nach dem Flußsammlerprinzip zur Erhöhung der dauermaqnetischen Flußdichte im Luftspalt aufgebaut ist.

12. Pumpe nach einem der Ansprüche 1 bis 11,
dadurch gekennzeichnet,
daß sämtliche stehenden und rotierenden Teile des Antriebsmotors mechanisch hermetisch geschützt sind, so daß sie durch den Kontakt mit übergetretenem, möglicherweise aggressiven Pumpgut nicht angegriffen werden.

13. Pumpe nach einem der Ansprüche 1 bis 12,
gekennzeichnet durch
eine Flüssigkeitskühleinrichtung (36) für den Antriebsmotor.

14. Pumpe nach einem der Ansprüche 1 bis 13,
dadurch gekennzeichnet,
daß der Durchmesser des Antriebsmotors größer oder höchstens gleich seiner Länge ist.

15. Pumpe nach einem der Ansprüche 1 bis 14,
dadurch gekennzeichnet,
daß der Durchmesser der rotierenden Teile des Pumpenabschnitts (6) etwa gleich dem Durchmesser des Antriebsmotors im Antriebsabschnitt (4) ist.

16. Pumpe nach einem der Ansprüche 1 bis 15,
dadurch gekennzeichnet,
daß der topfförmige Außenrotor (14,15) den Stator (12) von einer Seite her von außen übergreift und daß der Innenraum (13) des Stators zur Umgebung offen und zu dem Hohlraum des Antriebsabschnitts (4) hin hermetisch abgedichtet ist.

17. Pumpe nach einem der Ansprüche 1 bis 15,
dadurch gekennzeichnet,
daß der Außenrotor den Stator (12) von einer Seite her von außen übergreift und daß der Innenraum (13) des Stators zur Umgebung hermetisch dicht ist und zum Hohlraum des Antriebsabschnitts (4) hin offen ist.

18. Pumpe nach einem der Ansprüche 1 bis 15,
dadurch gekennzeichnet,
daß der Innenraum (13) des Stators (12) zur Umgebung und zum Hohlraum des Antriebsabschnitts (4) hin hermetisch dicht ist.

19. Pumpe nach einem der Ansprüche 1 bis 15,
dadurch gekennzeichnet,
daß die Antriebswelle in einem z.B. als Verschlußdeckel (110, 111) ausgebildeten Stirnwandelement des Gehäuses (8) etwa im Zentrum von Rotor (14, 15) und Stator (12) zusätzlich zu einer Lagerung zwischen Antriebsabschnitt (4) und Pumpenabschnitt (6) oder zu einer Lagerung an der Außenseite des Pumpenabschnitts (6) gelagert ist.

20. Pumpe nach Anspruch 1 - 19,
dadurch gekennzeichnet,
daß die nach außen hermetisch dichte Ausgestaltung von Antriebsabschnitt (4) und Pumpenabschnitt (6) in die Kategorie "explosionsgeschützt" erweitert ausgebildet ist.

## Claims

1. A fluid pump comprising an electric drive motor (12-15) having an impeller (26) of a pump section (6) mounted on its shaft (18, 118), and comprising a housing (8) which is hermetically sealed jointly for the drive motor (12-15) and the rotary parts (18, 26) of the pump section and is formed without shaft leadout to the outside and in the interior of which is formed a partition (22) having a shaft passage bore (24) and separating a drive section (4) containing the drive motor (12-15) from the pump section (6), with a cavity (25) of the drive section (4), in which the drive motor is located, containing at least predominantly a gas having a specific pressure,
characterized in that the drive motor has a cup-shaped external rotor with the rotor bottom (15) being located on the side of the partition, that the external rotor has a cantilever support (20) in the partition (22), and in that the drive motor (12-15) is constructed as a motor with excitation by permanent magnets and with electronic commutation of the stator current.

2. A pump according to claim 1,
characterized in that a seal (21, 123) is provided on the rotary shaft (18, 118) between the pump section (6) and the drive section (4).

3. A pump according to claims 1 and 2,
characterized in that a pressure equilibrium is present between the pumping material in the pump section (6) and the gas within the drive section (4).

4. A pump according to claims 1 and 2,
characterized in that the gas has a higher pressure than the pumping material in the pump section (6).

5. A pump according to any one of claims 1 to 4,
characterized in that a pressure regulator (40) is provided by means of which the pressure difference between the pumping material and the gas can be adjusted by regulation of the gas pressure.

6. A pump according to any one of claims 1 to 5,
characterized in that the drive motor has an electrical power of 10 kW or more.

7. A pump according to any one of claims 1 to 6,
characterized in that a sump (42) is provided in the cavity of the drive section (4), in which pumping material overflown from the pump section is collected.

8. A pump according to claim 7,
characterized by a return line (44) through which the contents of the sump (42) are pumped back to the pump section (6).

9. A pump according to any one of claims 1 to 8,
characterized in that the drive section (4) is provided only with cable and coolant connections (38, 36) and/or with a pressurized gas connection (34).

10. A pump according to any one of claims 1 to 9,
characterized in that the rotor bottom (15) is connected directly to the drive shaft.

11. A pump according to any one of claims 1 to 10,
characterized in that the drive motor is designed in accordance with the flux collection principle for increasing the permanent-magnetic flux density in the air gap.

12. A pump according to any one of claims 1 to 11,
characterized in that all stationary and rotary parts of the drive motor are mechanically hermetically protected so that they are not attacked by contact with overflown, possibly aggressive pumping material.

13. A pump according to any one of claims 1 to 12,
characterized by a liquid cooling means (36) for the drive motor.

14. A pump according to any one of claims 1 to 13,
characterized in that the diameter of the drive motor is greater than or at the most equal to its length.

15. A pump according to any one of claims 1 to 14,
characterized in that the diameter of the rotary parts of the pump section (6) is approximately equal to the diameter of the drive motor in the drive section (4).

16. A pump according to any one of claims 10 to 15,
characterized in that the cup-shaped external rotor (14, 15) engages over the stator (12) from one side on the outside thereof, and in that the interior (13) of the stator is open towards the environment and is hermetically sealed towards the cavity of the drive section (4).

17. A pump according to any one of claims 1 to 15,
characterized in that the external rotor engages over the stator (12) from one side on the outside thereof, and in that the interior (13) of the stator is hermetically sealed towards the environment and is open towards the cavity of the drive section (4).

18. A pump according to any one of claims 1 to 15,
characterized in that the interior (13) of the stator (12) is hermetically sealed towards the environment and towards the cavity of the drive section (4).

19. A pump according to any one of claims 1 to 15,
characterized in that the drive shaft is supported in an end wall member of the housing (8), which is e.g. in the form of a closure lid (110, 111), approximately in the center of rotor (14, 15) and stator (12), in addition to a support between drive section (4) and pump section (6) or a support on the outside of the pump section (6).

20. A pump according to claims 1 to 19,
characterized in that the outwardly hermetically sealed design of drive section (4) and pump section (6) is extended to the category "explosion-proof".

## Revendications

1. Pompe à fluides comprenant un moteur électrique (12-15) sur l'arbre (18, 118) duquel est fixé un rotor de pompe (26) d'un compartiment de pompage (6) et comprenant un carter (8) qui assure l'étanchéité hermétique de l'ensemble du moteur (12-15) et des parties tournantes (18, 26) du compartiment de pompage (6) et ne présente aucune traversée d'arbre vers l'extérieur et à l'intérieur duquel est formée une paroi de séparation (22) séparant un compartiment moteur (4), contenant le moteur (12-15), du compartiment de pompage (6) et présentant un alésage de traversée d'arbre (24), dans laquelle se trouve, dans un volume intérieur (25) du compartiment moteur (4) contenant le moteur, au moins principalement un gaz présentant une pression prédéterminée, caractérisée en ce que le moteur présente un rotor extérieur en forme de pot dont le fond (15) est du côté de la paroi de séparation, en ce que le rotor extérieur présente un palier volant (20) dans la paroi de séparation (22) et en ce que le moteur est un moteur à excitation magnétique permanente à commutation électronique du courant du stator.

2. Pompe selon la revendication 1,
caractérisée en ce
qu'une étanchéité (21, 123) est prévue sur l'arbre tournant (18, 118) entre le compartiment de pompage (6) et le compartiment moteur (4).

3. Pompe selon les revendication 1 et 2,
caractérisée en ce
qu'une pression égale règne dans le matériau pompé du compartiment de pompage (6) et dans le gaz situé dans le compartiment moteur (4).

4. Pompe selon les revendication 1 et 2,
caractérisée en ce que
le gaz le gaz présente une pression plus élevée que le matériau pompé du compartiment de pompage (6).

5. Pompe selon l'une quelconque des revendications 1 à 4,
caractérisée en ce
qu'un régulateur de pression (40) est prévu, grâce auquel la différence de pression entre le matériau pompé et le gaz peut être réglée par ajustement de la pression du gaz.

6. Pompe selon l'une quelconque des revendications 1 à 5,
caractérisée en ce que
le moteur électrique a une puissance électrique de 10 kW ou plus.

7. Pompe selon l'une quelconque des revendications 1 à 6,
caractérisée en ce
qu'un bac de récupération (42) est prévu dans le volume intérieur du compartiment moteur (4), dans lequel est rassemblé le matériau pompé échappé du compartiment de pompage.

8. Pompe selon la revendication 7,
caractérisée par
un conduit de recyclage (44) par lequel le contenu du bac de récupération (42) est renvoyé dans le compartiment de pompage (6).

9. Pompe selon l'une quelconque des revendications 1 à 8,
caractérisée en ce que
seuls des raccordements de câble et d'agent de refroidissement (38, 36) et/ou un raccordement de gaz sous pression (34) sont prévus dans le compartiment moteur (4).

10. Pompe selon l'une quelconque des revendications 1 à 9,
caractérisée en ce que
le fond du rotor (15) est relié directement à l'arbre moteur.

11. Pompe selon l'une quelconque des revendications 1 à 10,
caractérisée en ce que
le moteur est construit selon le principe de la concentration de flux afin d'augmenter la densité de flux d'aimantation permanente dans l'entrefer.

12. Pompe selon l'une quelconque des revendications 1 à 11,
caractérisée en ce que
l'ensemble des pièces fixes et tournantes du moteur sont mécaniquement protégées hermétiquement de façon qu'elles ne soient pas attaquées par contact avec du matériau pompé éventuellement agressif échappé.

13. Pompe selon l'une quelconque des revendications 1 à 12,
caractérisée par
un dispositif de refroidissement à liquide (36) du moteur.

14. Pompe selon l'une quelconque des revendications 1 à 13,
caractérisée en ce que
le diamètre du moteur est supérieur ou à la limite égal à sa longueur.

15. Pompe selon l'une quelconque des revendications 1 à 14,
caractérisée en ce que
le diamètre des pièces tournantes du compartiment de pompage (6) est environ égal au diamètre du moteur du compartiment moteur (4).

16. Pompe selon l'une quelconque des revendications 1 à 15,
caractérisée en ce que
le rotor extérieur en forme de pot (14, 15) empiète extérieurement sur le stator (12) à partir d'un côté et en ce que le volume intérieur (13) du stator est ouvert à l'environnement et est hermétiquement isolé du volume intérieur du compartiment moteur (4).

17. Pompe selon l'une quelconque des revendications 1 à 15,
caractérisée en ce que
le rotor extérieur empiète extérieurement sur le stator (12) à partir d'un côté et en ce que le volume intérieur (13) du stator est isolé hermétiquement de l'environnement et est ouvert vers le volume intérieur du compartiment moteur (4).

18. Pompe selon l'une quelconque des revendications 1 à 15,
caractérisée en ce que
le volume intérieur (13) du stator (12) est isolé hermétiquement de l'environnement et du volume intérieur du compartiment moteur (4).

19. Pompe selon l'une quelconque des revendications 1 à 15,
caractérisée en ce que
l'arbre moteur est supporté à rotation de plus dans un élément de paroi frontale, sous forme par exemple de couvercle de fermeture (110, 111), du carter (8) sensiblement au centre du rotor (14, 15) et du stator (12) en plus d'un palier entre le compartiment moteur (4) et le compartiment de pompage (6) ou est supporté à rotation du côté extérieur du compartiment de pompage (6).

20. Pompe selon l'une quelconque des revendications 1 à 19,
caractérisée en ce que
la configuration d'isolation hermétique du compartiment moteur (4) et du compartiment de pompage (6) se situe dans la catégorie "résistant aux explosions" étendue.
